(19) **Europäisches Patentamt / European Patent Office / Office européen des brevets**

(11) **EP 3 929 544 A1**

(12) **EUROPEAN PATENT APPLICATION**

(43) Date of publication:
**29.12.2021 Bulletin 2021/52**

(51) Int Cl.:
**G01J 3/02** $^{(2006.01)}$

(21) Application number: **20182724.3**

(22) Date of filing: **26.06.2020**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**KH MA MD TN**<br><br>(71) Applicant: **Nokia Technologies Oy<br>02610 Espoo (FI)** | (72) Inventors:<br>• **YUAN, Xin<br>New Providence, NJ 07974 (US)**<br>• **QIAO, Mu<br>Summit, NJ 07901 (US)**<br>• **LIU, Xuan<br>Berkeley Heights, NJ 07922 (US)**<br><br>(74) Representative: **Swindell & Pearson Limited<br>48 Friar Gate<br>Derby DE1 1GY (GB)** |

(54) **APPARATUS, SYSTEMS AND METHODS FOR COMPRESSIVE SENSING**

(57) An apparatus comprising:
a detector configured to detect, separately during separate exposure periods of multiple exposure periods, spatially modulated light;
spatial modulation means for applying a different spatial modulation to received light separately during separate exposure periods of the multiple exposure periods, to produce spatially modulated light; and
spatial condensing means for condensing the spatially modulated light for detection by the detector.

FIG. 1

**Description**

TECHNOLOGICAL FIELD

Examples of the disclosure relate to apparatus, systems and methods for enabling compressive sensing.

BACKGROUND

According to the theory of compressive sensing, traditional sampling is replaced by measurements of inner products with random vectors.
Light modulated by reflection from or transmission through an object, if detected directly by a two-dimensional pixelated detector, is an oversampled field that has a sparser representation in some domain. As a consequence, detecting coded fields (sparse incoherent fields rather than the whole field) can capture sufficient information to characterise the object. For example, spectral images of the object can be determined from the detected coded fields.

BRIEF SUMMARY

According to various, but not necessarily all, embodiments of the invention there is provided an apparatus comprising:

a detector configured to detect, separately during separate exposure periods of multiple exposure periods, spatially modulated light;
spatial modulation means for applying a different spatial modulation to received light separately during separate exposure periods of the multiple exposure periods, to produce spatially modulated light; and
spatial condensing means for condensing the spatially modulated light for detection by the detector.

According to various, but not necessarily all, embodiments of the invention there is provided an apparatus comprising:

a detector configured to detect, separately during each one of multiple exposure periods, spatially modulated light;
spatial modulation means for applying a different spatial modulation to received light for each exposure period, to produce spatially modulated light; and
spatial condensing means for condensing the spatially modulated light for detection by the detector.

The term 'each one' connotes, for an exposure period, every one of a group of exposure periods. In some examples the group of exposure periods is a continuous series of exposure period. In some examples the group of exposure periods is a noncontinuous series, for example an intermittent series of exposure periods. In some examples the group of exposure periods is a sub-set of a set of exposure periods. In some examples the group of exposure periods is a set of exposure periods.
The use of 'each' defines the separation in time of combinations of modulation-condensing-detection. Each combination has a different spatial modulation and a different detection (different exposure period).
According to various, but not necessarily all, embodiments of the invention there is provided an apparatus comprising:

a detector configured to detect spatially modulated light in an exposure period;
spatial modulation means for applying a spatial modulation to received light;
spatial condensing means for condensing the spatially modulated light for detection by the detector,
wherein the detector is configured to detect spatially modulated light in a first exposure period, the spatial modulation means is configured to apply a first spatial modulation to received light for the first exposure period, to produce first spatially modulated light; and wherein the spatial condensing means is configured to condense the first spatially modulated light for detection by the detector in the first exposure period;
wherein the detector is configured to detect spatially modulated light in a second exposure period, different to the first exposure period, the spatial modulation means is configured to apply a second spatial modulation, different to the second first spatial modulation, to received light for the second exposure period, to produce second spatially modulated light; and wherein the spatial condensing means is configured to condense the second spatially modulated light for detection by the detector in the second exposure period, wherein the detector is configured to perform distinct and separate integrations (accumulations) over the first exposure period and over the second exposure period.

In some, but not necessarily all examples the spatial condensing means comprises one or more optical elements.

In some, but not necessarily all examples the spatial condensing means comprises a light guide of narrowing aperture to condense the light, via total internal reflection, in transverse directions.

In some, but not necessarily all examples the spatial condensing means comprises a tapering optical fibre that has a reducing cross-sectional area.

In some, but not necessarily all examples the detector comprises a different detector for each one of multiple spectral channels.

In some, but not necessarily all examples the detector comprises a different single pixel detector for each one of multiple spectral channels.

In some, but not necessarily all examples the different effective spatial modulation is configured to cause modulation by different spatial modulation patterns of the received light, wherein different spatial patterns are used for different exposure periods.

In some, but not necessarily all examples the spatial modulation, for an exposure period, is randomized, pixelated modulation over a two-dimensional area.

In some, but not necessarily all examples the spatial modulation is pixelated modulation over a two-dimensional area, and the pixelated modulation comprises pixels arranged in rows and columns that are parallel to rows and columns of pixels of the detector when projected onto the detector.

In some, but not necessarily all examples the spatial modulating means comprises a two-dimensional spatially coded aperture comprising at least a first plurality of portions, having a first transparency, and at least a second plurality of portions, having a second different transparency, wherein the first plurality of portions and the second plurality of portions are spatially distributed in two dimensions.

In some, but not necessarily all examples the spatial modulating means comprises a spatially coded aperture that has a time variable pattern or has a fixed pattern and is movable.

In some, but not necessarily all examples a system comprises the apparatus.

In some, but not necessarily all examples the system or apparatus further comprises processing means for processing output of the detector to obtain an image of at least part of an object wherein an input beam of light for spatial modulation and detection by the apparatus comprises light reflected from the object; and means for providing an image of at least part of the object from electrical output signals of the detector.

In some, but not necessarily all examples the input beam of light for spatial modulation and detection by the apparatus is obtained from an optical coherence tomography arrangement and the provided image is a real three-dimensional image of the object that has three spatial dimensions.

According to various, but not necessarily all, embodiments of the invention there is provided a method comprising:

applying a different spatial modulation to received light in dependence upon a current exposure period in a series of a plurality of exposure periods, to produce differently spatially modulated light over the plurality of exposure periods; condensing the spatially modulated light for detection by a detector.

According to various, but not necessarily all, embodiments of the invention there is provided a computer program that when run by at least one processor enables the at least one processor to control:

applying a different spatial modulation to received light in dependence upon a current exposure period in a series of a plurality of exposure periods of a detector, to produce differently spatially modulated light over the plurality of exposure periods.

According to various, but not necessarily all, embodiments of the invention there is provided examples as claimed in the appended claims.

BRIEF DESCRIPTION

For a better understanding of various examples that are useful for understanding the detailed description, reference will now be made by way of example only to the accompanying drawings in which:

FIG. 1 shows an example of the apparatus;
FIG. 2 shows an example of the apparatus applying the compressive sensing principle of examples of the disclosure;
FIG. 3 illustrates an example of an optical coherence tomography arrangement for measurement; and
Fig. 4 illustrates an example of a method.

DETAILED DESCRIPTION

Examples of the disclosure relate to an apparatus 1 comprising:

a detector 7 configured to detect, separately during each one of multiple exposure periods, spatially modulated light 13;
spatial modulation means 3 for applying a different spatial modulation to received light 9 for each exposure period, to produce spatially modulated light 11; and
spatial condensing means 5 for condensing the spatially modulated light 13 for detection by the detector 7.

In some but not necessarily all examples, the beam of light 9 can be provided by an optical coherence tomography (OCT) arrangement, which acts as a source 17.

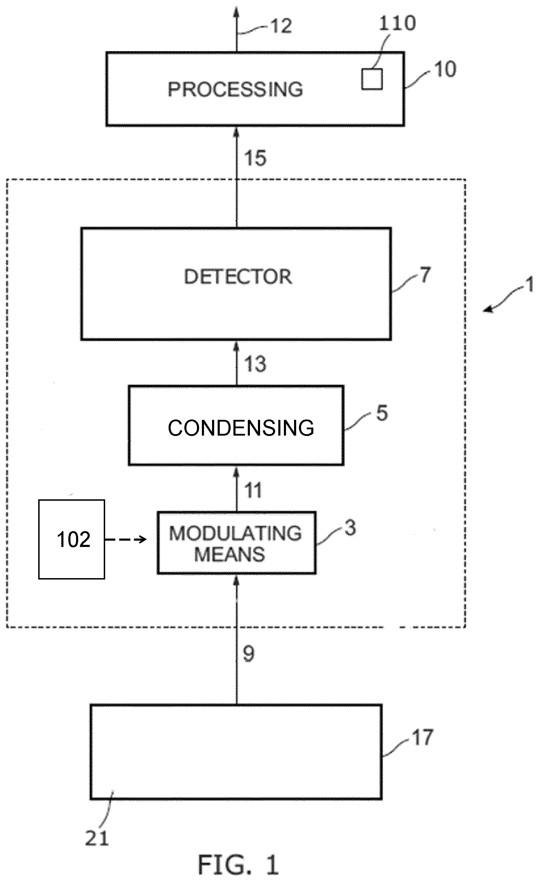

Fig. 1 schematically illustrates an example apparatus 1 comprising:

a detector 7 configured to detect, separately during each one of multiple exposure periods, spatially modulated light 13;
spatial modulation means 3 for applying a different spatial modulation to received light 9 for each exposure period, to produce spatially modulated light 11; and
spatial condensing means 5 for condensing the spatially modulated light 13 for detection by the detector 7.

A spatial modulation pattern (code) can be configured to selectively remove information from the light 9 so that only portions of the light 9 are detected. A different spatial modulation pattern can be used for each different exposure.

The different spatial modulation patterns represent different codes that differently code the light 9. In this way, the light 9 from different exposure periods are code-divided at the detector 7. This code-division allows the separation of the images.

Each of the multiple images, from different exposures, can be differently coded allowing them to be recovered from the output of the detector 7. Each image plane in the spatial data cube $(x,y,\lambda)$ is modulated by a different code for different exposures.

The different coding can, for example, be achieved using a time- variable spatial code. The spatial modulation means 3 can, for example, be configured to apply a different spatial modulation pattern to the received light during each exposure period. The same spatial modulation pattern is used during an exposure period and the spatial modulation pattern is changed between exposure periods.

The different spatial modulation pattern can be provided by a dynamic (time-variable) spatially coded aperture that has a time-variable pattern or has a fixed pattern and is movable. The dynamic spatially coded aperture could comprise, for example, a liquid crystal on silicon (LCOS) modulator, or a digital micromirror device (DMD) array, or a fixed pattern (passive) spatially coded aperture that is moved (translated or rotated). Movement can be performed by an electrically controlled actuator. One example of an electrically controlled actuator is a motor, for example a servo motor controlled by a processor.

In other examples, the different coding can, for example, be achieved using a fixed spatial modulation pattern (code), and a spatial offset that is different between the exposure periods. The time-varying spatial shift can, for example be achieved by moving an optical element configured to provides a spatial shift (an offset), between the spatially modulated light 11 from a first exposure period and the spatially modulated light 11 from a second exposure period.

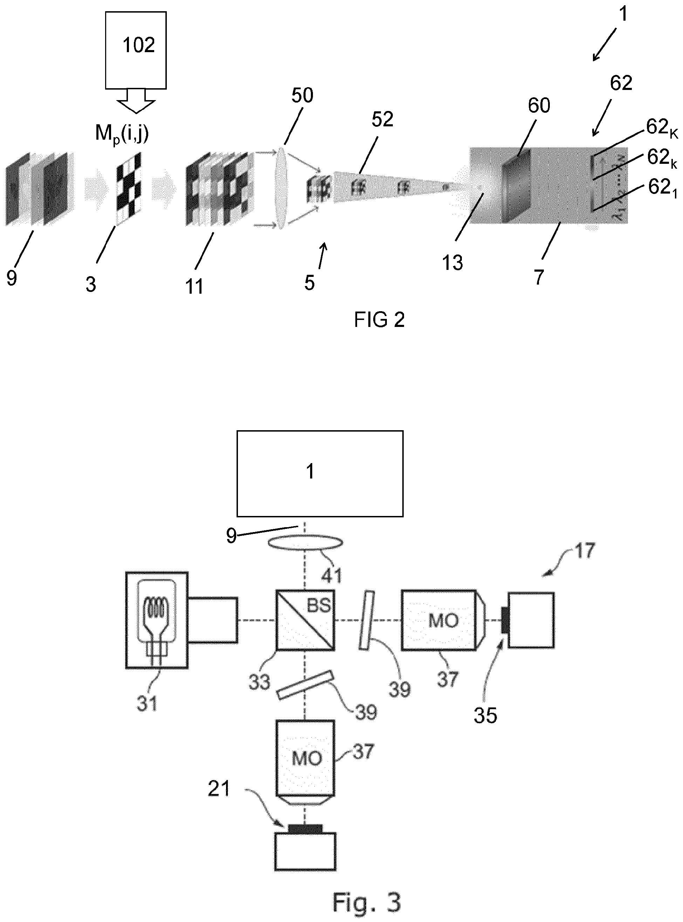

In the example illustrated in Figs. 1 and 2, the apparatus 1 comprises:

spatial modulating means 3 for spatially modulating a beam of light 9 to produce a spatially modulated beam of light 11;
condensing means 5 for spatially condensing the spatially modulated beam of light 11 to produce a condensed spatially modulated beam of light 13; and
means 102 for causing a time-variation of the spatial modulating means 3 between exposure periods so that each exposure period is associated with different spatial modulation (illustrated in Fig. 1).

The spatial modulating means 3 can, in some examples, comprise one or more spatial modulators. An example of a spatial modulator 3 is a spatially coded aperture.

In the example of Fig. 1, a spatial modulator 3 is arranged within the apparatus 1 so that when the apparatus 1 is coupled to a source 17 of the input beam of light 9, the input beam of light 9 is incident, at least in part, upon the spatial modulator 3.

The spatial modulator 3 may selectively remove information from the input beam of light 9 so that only portions of the input beam of light 9 are detected. In some examples the spatial modulator 3 may be arranged to convert a three-dimensional signal [x, y, A] into a coded three-dimensional signal [x, y, $\lambda$].

The spatial modulator 3 may comprise any means which may be arranged to spatially modulate the input beam of light 9. The spatial modulation occurs over a transverse cross-sectional area of the input beam of light 9. The spatial modulation comprises amplitude modulation that varies in dependence upon a location within the transverse cross-sectional area of the input beam of light 9.

In some examples the spatial modulator 3 comprises a spatially coded aperture. The spatially coded aperture provides for spatial modulation over a cross-sectional area of the input beam of light 9 that passes through the coded aperture. The coded aperture is coded to provide amplitude modulation that varies in dependence upon a location within the aperture. The coded aperture defines a fixed two-dimensional pattern of spatially varying transparency. The spatially coded aperture physically modulates the beam of light to a spatially compressed/sparse format.

The spatially coded aperture may comprise a non-uniform optical mask or any other suitable type of aperture that provides amplitude modulation that varies in dependence upon a location within the aperture.

The spatially coded aperture may be a two-dimensional spatially coded aperture or any other suitable type of aperture. The two-dimensional spatially coded aperture defines a two-dimensional plane. The beam of light 9 may travel in a direction normal (orthogonal) to the two-dimensional plane.

In other examples the spatial modulator 3 could comprise a liquid crystal on silicon (LCOS) modulator, a digital micromirror device (DMD) array or any other suitable type of spatial modulator 3.

The spatial modulator 3 can comprise multiple different portions that have a particular transparency. In some examples the spatial modulator 3 may comprise at least a first portion (e.g. a first plurality of first portions) having a first level of transparency to the input beam of light 9 and at least a second portion (e.g. a second plurality of second portions) having a second, different level of transparency to the input beam of light 9. In some examples the spatial modulator 3 may comprise at least multiple spatially distributed non-overlapping first portions, that are distributed over an area in two dimensions and have a first level of transparency to the input beam of light 9 and at least multiple spatially distributed non-overlapping second portions that are distributed over the area in two dimensions and have a second, different level of transparency to the input beam of light 9. In at least some examples, the spatially distributed first portions and the spatially distributed second portions do not overlap. The spatially distributed first portions and the spatially distributed second portions can be contiguous and, in some examples, the spatially distributed first portions and the spatially distributed second portions completely fill the area. The different levels of transparency may allow different levels of light to pass through the spatial modulator 3. In some examples the spatial modulator 3 may be a binary modulator 3 so that only two different absorbencies are provided by the respective portions of the spatial modulator 3. In other examples the spatial modulator 3 may be a grey-scale modulator and may comprise more than two different levels of transparency in the different portions of the spatial modulator 3.

The different portions of the spatial modulator 3 may be arranged in any suitable spatial pattern. In some examples the respective portions of the spatial modulator 3 having different transparencies are pixelated and arranged in a pixelated pattern. The pixelated arrangement may have the respective portions of the spatial modulator 3 arranged in an array of columns and rows of pixels. In some examples, the pixels are square or rectangular.

The spatially coded aperture can comprise multiple different portions that are coded with a particular transparency, for example, the spatially coded aperture can be pixelated and comprise multiple different portions (pixels) that are arranged as an array in rows and columns, where the pixels are coded with a particular transparency. The two-dimensional pattern of pixels (portions) that have a first transparency is different to the two-dimensional pattern of pixels (portions) that have a second transparency, different to the first transparency.

The number of transparent pixels, partially transparent pixels, and opaque pixels in a spatially coded aperture can vary in different implementations of the disclosure. In some examples approximately half of the pixels of the spatial modulator 3 could be absorbent so that half of the incident area of the spatial modulator 3 acts to block the input beam of light 9 while the other half allows the incident beam of light to pass, or partially pass through in a spatially-coded format.

In some examples the different portions (e.g. pixels) of the spatial modulator 3 may be arranged (at that exposure period) in a random pattern (which encompasses pseudo random patterns) that is random in two dimensions. The random pattern may be an irregular pattern. The random pattern might not be defined or arranged in relation to any specific object. In other examples the respective portions (e.g. pixels) of the spatial modulator 3 may be arranged in a predetermined pattern.

The transparency at each pixel defines a fixed (for each exposure period) two-dimensional pattern of spatially varying transparency. In some examples, the transparency at each pixel in a row defines a fixed (for each exposure period) one-dimensional pattern of spatially varying transparency that does not repeat or does not repeat within a minimum number of columns. In some examples, the transparency at each pixel in a column defines a fixed (for each exposure period) one-dimensional pattern of spatially varying transparency that does not repeat or does not repeat within a minimum number of rows. In some examples, the transparency at each pixel defines a fixed (for each exposure period) two-dimensional pattern of spatially varying transparency that has a random or pseudorandom spatial distribution. In some examples, the pixels are coded as either opaque or transparent. In other examples, the pixels are coded using grey scale.

The spatial modulation can therefore be a randomized, pixelated modulation over a two-dimensional area.

A different spatial modulation is applied at each exposure period. The incident light 9 is modulated by the same spatial modulation pattern (code), via the same spatially coded aperture, in each exposure period but is modulated by different spatial modulation patterns (codes), via correspondingly different spatially coded apertures, in different exposure periods. Each exposure period has one spatial modulation pattern (code) provided by one spatially coded aperture. Each exposure period has a different spatial modulation pattern (code) provided by a spatially coded aperture.

The spatial modulation pattern (code) are de-correlated in space and time. For example, the spatial modulation pattern (code) does not repeat or does not repeat within a minimum number of exposure periods. The spatial modulation pattern (code) can for example have a random or pseudorandom temporal-spatial distribution.

The series of spatial modulation patterns (codes), one for each exposure period, may be selected according to the source 17 of the beam of light 9. It can, for example, be selected according to the object 21 or type of object that is to be imaged, for example, by an OCT arrangement 17.

In some examples the spatial modulator 3 may be fixed in position relative to the other components of the apparatus 1. In other examples the spatial modulator 3 may be arranged to be moveable relative to the other components of the apparatus 1.

In some examples the transparency of the portions of the spatial modulator 3 may be wavelength dependent. In such examples the spatial modulation of the input beam of light 9 by the respective portions of the spatial modulator 3 will be dependent upon the wavelengths within the input beam of light 9.

The condensing means 5 for condensing the spatially modulated beam of light 11 is arranged within the apparatus 1 so that the spatially modulated beam of light 11, or at least part of the spatially modulated beam of light 11, provided by the spatial modulator 3 is incident upon the condensing means 5. Condensing reduces a transverse cross-sectional area of the spatially modulated beam of light 11. In at least some examples the condensing is only in the plane of the aperture/beam.

In some examples, the condensing means 5 comprises one or more optical elements. In some examples, the condensing means 5 comprises a light guide of narrowing transverse cross-section to condense the light. The light guide can, for example, be a tapering optical fibre that has a reducing cross-sectional area for at least a portion of its length.

The condensing means 5 provides a condensed spatially modulated beam of light 13 as an output.

The detector 7 is configured to detect the condensed spatially modulated beam of light 13 during each exposure period. The detector 7 is arranged within the apparatus 1 so that the condensed spatially modulated beam of light 13 is incident on the detector 7 for detecting the condensed spatially modulated beam of light 13.

The detector can be arranged to transduce an accumulation of an incident beam of light, during an exposure period, for each one a plurality of different frequency ranges, into an electrical output signal 15.

The beam of light 9 used during measurement can have a broad spectrum (it is broadband). It comprises light that has a broad frequency spectrum. The broadband beam of light 9 can, for example, comprise light that has wavelengths that differ by over 20nm. The broadband beam of light 9 can, for example, comprise light that has wavelengths that differ by between 20nm and 50nm.

The spatially modulated beam of light 11 is a sparse three-dimensional data cube [x, y, $\lambda$] with a two-dimensional slice [x, y] for each wavelength/spectral channel. The information content in the spatially modulated beam of light 11 is condensed by the condensing means 5 to a smaller data cube represented by the condensed spatially modulated beam of light 11. The spectral components of the smaller data cube represented by the condensed spatially modulated beam of light 11 are detected by the detector 7. This is repeated over multiple exposure periods using different spatial modulation of the spatially modulated beam of light 11. The knowledge of the different spatial modulations used will enable reconstruction of the original three-dimensional data cube [x, y, $\lambda$] from the series of detected spectral components of the condensed spatially modulated beam of light 11 that are detected over a series of exposure periods with different spatial modulations.

The condensed spatially modulated beam of light 13 represents a condensed version of the sparse three-dimensional data cube. The condensing, caused by the condensing means 5, is within the x-y plane. In the example illustrated in Fig. 2, each (similarly) spatially coded two-dimensional slice [x, y] for each wavelength/spectral channel k is condensed and detected by the spectrally discriminating detector 7. The light 9 can, for example, arrive from any suitable source. The light 9 can, for example, comprise light that has been reflected from or that has passed through a first scene or a first object.

Where the broadband beam of light 9 has been reflected from or has passed through a scene or an object 21, then the output signal 15 provided by the detector 7 comprises information indicative of the scene or object 21. In some but not necessarily all examples, the processing means 10 uses the output signal 15 to provide a spectral image of the scene or object 21 or a three-dimensional image of the object.

Where the source 17 of the beam of light 9 is an optical coherence tomography (OCT) arrangement, the output signal 15 provided by the detector 7 comprises information indicative of the object 21 which can, for example, be a three-dimensional object imaged by the OCT arrangement 17. An OCT arrangement can be used to transform a three-dimensional spatial image [x, y, z] to a three-dimensional spatio-spectral image [x,y,λ]. The temporal code-division applied, over distinct exposure periods, by the spatial modulation means 3 allows the separation of the image [x, y] for each data cube [x, y, $\lambda_{k}$] from the detector output by processing, for example using processor 10. Multiple images detected across multiple exposure periods in a single frequency channel $\lambda_{k}$ of the detector are differently coded allowing the three-dimensional spatio-spectral image [x, y, λ] and/or the three-dimensional spatial image [x, y, z] to be recovered from the output of the detector 7. The three-dimensional spatio-spectral image [x, y, λ] can be constructed by stacking the images [x, y] for each spectral channel $\lambda_{k}$. The three-dimensional spatial image [x, y, z] can be obtained by transforming, for example using a Fourier transform, the three-dimensional spatio-spectral image [x, y, λ] to the three-dimensional spatial image [x, y, z]

In some but not necessarily all examples, the processing means 10 processes the output signal 15, for example using non-linear optimization, to produce an image. The image has two spatial dimensions (x,y) and a third dimension in space (z) or wavelength (A) forming respectively a real three-dimensional image that has three spatial dimensions (x,y,z) or a hyperspectral (two-dimensional) image (x,y,λ). Where an optical coherence tomography (OCT) arrangement 17 provides the beam of light 9 from an object, the non-linear optimization can be used to produce a real three-dimensional image of the object 21 (a real image that has three spatial dimensions x, y, z). This produced three-dimensional image can be rendered on a display or other suitable user output device.

The processing means 10 can be a part of the apparatus 1 or, as shown in Fig. 1, separate from the apparatus 1. In some examples, the processing means 10 is remote from the apparatus 1. The processing means 10 can comprise a processor or controller and memory. The processing means 10 (or other processors) can load and use a computer program stored in a memory to perform its functions. The functions performed can, for example, comprise one or more of: controlling a time-variation of the spatial modulation means 3, and processing an output signal 15, for example, using non-linear optimization to produce an image. The processor 10 can, therefore provide at least part of a means for causing a time-variation of the spatial modulating means 3 between exposure periods.

In, the example illustrated in Fig. 1, but not necessarily all examples, the apparatus 1 comprises means 102 for causing a time-variation of the spatial modulating means 3 between the exposure periods to provide different spatial modulation for each exposure period.

The means 102 for causing a time-variation of the spatial modulating means 3 between the exposure periods to provide different spatial modulation for each exposure period can for example be circuitry for controlling or enabling control of operation of the condensing means 5 and/or the spatial modulating means 3.

In some examples, the means 102 comprises a driver for moving or adapting some or all of the spatial modulating means 3.

In some examples, the means 102 enables time-variation, between the exposure periods, of the effective spatial modulation at the detector 7 of the received light 9. For example, it causes different spatial modulation pattern to be applied during different exposure periods by the spatial modulating means 3.

In some examples, the means 102 enables time-variation of the spatial modulator 3 (e.g. the spatially coded aperture) such that a different spatial modulation (e.g. a different spatially coded aperture) is provided for the light 9 for each exposure period. The spatial modulator 3 (e.g. spatially coded aperture) is a dynamically variable spatial modulator (e.g. a dynamically variable spatially coded aperture) and can be controlled to change its spatial modulation (e.g. spatial coding). In these examples the spatial modulator 3 (e.g. the spatially coded aperture) could comprise a liquid crystal on silicon (LCOS) modulator, a digital micromirror device (DMD) array or any other suitable type of spatial modulator 3.

In some examples, the means 102 enables time-variation of a position of a fixed spatial modulator 3 (e.g. fixed spatially coded aperture) such that a different offset of a fixed spatially coded aperture is provided for the light 9 for each exposure period.

In some examples, the means 102 enables time-variation of a position of the condensing element 5. For example, the condensing element 5 can be laterally shifted and/or rotated.

Fig. 2 shows the compressive sensing principle of examples of the disclosure.

In the example of Fig. 2, an object (not illustrated) reflects (or otherwise provides) broadband light which has been directed onto (or through) the object. Different wavelengths of the incident light are reflected differently depending upon the internal structure of the object. This provides a plurality of spatial images. Each of the spatial images corresponds to a different wavelength of light $\lambda_{k}$ ($\lambda_{1}$ to $\lambda_{K}$). The different spatial images define a three-dimensional signal [x, y, $\lambda_{k}$].

The input beam of light 9 is a three-dimensional data cube X=[x, y, $\lambda_{k}$] with a two-dimensional slice [x, y], a spatial image, for each frequency range (wavelength/spectral channel $\lambda_{k}$).

In the example of Fig. 2 the spatial modulator 3 comprises a two-dimensional spatially coded aperture. Other types of modulator 3 may be used in other examples of the disclosure, for example as previously described. The spatial modulator 3 provides a different two-dimensional spatially coded aperture $M_{p}$ in each exposure period p.

The two-dimensional spatial image (x, y) in the input beam of light 9 is modulated by the spatially coded aperture to produce a spatially modulated beam of light 11.

The spatially modulated beam of light 11 is a sparse three-dimensional data cube [x, y, $\lambda_{k}$] with a two-dimensional slice [x, y] for each wavelength/spectral channel $\lambda_k$ coded by the spatially coded aperture that has variable transparency in the x-y plane.

Let the three -dimensional data cube [x, y, $\lambda_{k}$] be represented by X, where $X \in \mathbb{R}^{N_x \times N_y \times N_\lambda}$. Let $X_k$, $X_k \in \mathbb{R}^{N_x \times N_y}$, denote the 2D frame (of size $N_x$ rows and $N_y$ columns) corresponding to spectral channel $\lambda_k$. Let $x_k$, $x_k \in \mathbb{R}^{N_x N_y}$, denote a vectorized form of the 2D frame that has a size of $N_x N_y$ rows.

Let the spatially coded aperture for each distinct exposure period p of the detector 7 be represented by a two-dimensional mask pattern $M_p$ where $M_p \in \mathbb{R}^{N_x \times N_y}$.

Let the spatially modulated data cube after the mask $M_p$ be represented by $Z_p$ where $Z_p \in \mathbb{R}^{N_x \times N_y \times N_\lambda}$.

In this example, but not necessarily all examples, let us assume a one-to-one correspondence between the [i, j] image/detection space where $(i,j) \in \mathbb{R}^{N_x \times N_y}$ and the [x, y] space at the coded aperture where $(x, y) \in \mathbb{R}^{N_x \times N_y}$.

Then during each exposure p

$$Z_p\ (i,j) = M_p\ (i,j) \odot X\ \ (i,j),$$

$\odot$ *denotes elementwise product in* (*i,j*) *dimension*

The spatially modulated beam of light 11 provided by the spatial modulator 3 is then condensed by the condensing element 5. In the example of Fig. 2 the condensing element 5 comprises one or more optical elements 50, 52. Different types of condensing elements can be used in other examples of the disclosure. In this example, the condensing element 5 uses a light guide 52 of narrowing aperture (transverse cross-sectional area) to condense the light, via total internal reflection, in transverse directions (the x-direction and the y-direction). The condensing element 5 can, for example, comprise a tapering optical fibre 52 that has a reducing cross-sectional area along at least a portion of its length. In this example condensation (compression) occurs in two spatial direction. In other examples condensation (compression) can occur in only a single direction or can occur sequentially in one direction and then sequentially in the other, orthogonal direction.

In some but not necessarily all examples, the condensed image can be considered to be a point source of light, for example, effectively having zero spatial dimension on the scale of the detector 7. For example, it can have a maximal extent of 1 $\mu$m. That is the condensed image is sized to be captured by a single pixel at the detector 7.

The condensed spatially modulated beam of light 13 represents, in each exposure period, a condensed/compressed version of the sparse multi-dimensional data cube [x, y, $\lambda_{k}$].

The spatially modulated and condensed beam of light 13 is then incident upon the detector 7.

The detector 7 makes a separate detection for each exposure period p and for each spectral channel k. In each exposure period the detector 7 detects each spectral component of the compressed version of the spatially-condensed sparse multi-dimensional data cube [x, y, $\lambda_{k}$]. It repeats this for each exposure period and a different mask $M_p$ is used for each exposure period p.

The detector 7 can, for example, be a spectrometer that detects each spectral channel separately. The detector 7 can, for example, be a single pixel spectrometer that detects each spectral channel separately as a single pixel.

The condensed spatially modulated data cube 13 after the mask $\boldsymbol{M_p}$, for exposure period p, and the condensing means 5 can be represented by as a series of values $y_{p,k}$ for each spectral channel k.

Within the detector 7, the condensed beam of light can, for example, be dispersed by a dispersion element 60 (e.g. diffracted by, for example, a transmissive or reflective diffraction grating or refracted by, for example, a prism) to produce for each wavelength/spectral channel $\lambda_k$ ($\lambda_1$ to $\lambda_K$) a signal that is detected by a detector $62_k$ ($62_1$ to $62_K$), specific to that channel $\lambda_k$. For example, each frequency specific signal (spectral channel) can be separately detected by a pixel $62_k$, of a one-dimensional camera array 62. Each pixel $62_k$ detects, during each exposure period p, the summation of the condensed spatially modulated beam of light 13 for a specific wavelength/spectral channel $\lambda_k$ of the wavelength/spectral channels $\lambda_1$ to $\lambda_K$.

The detector 7 separately detects each wavelength/spectral channel $\lambda_k$ over each different exposure period p. This reduces the sparse three-dimensional data cube [x, y, $\lambda_{k}$] to a compressed one-dimensional projection [$\lambda_{k}$] in a single shot.

Thus for each mask pattern $M_p$, the detector detects a different measurement $y_{p,1}$, $y_{p,2}$, $y_{p,3}$ ...$y_{p,k}$ ...$y_{p,K}$ for each of the spectral channels k=1, 2... K,

$$y_{p,k} = \sum_{i=1}^{N_x}\sum_{j=1}^{N_y} Z_{p,k} = \sum_{i=1}^{N_x}\sum_{j=1}^{N_y} M_p\,(i,j) \odot X_k\,(i,j)$$

$\odot$ *denotes elementwise product in (i,j) dimension*

This can be represented in vectorized form as:

$$y_{p,k} = m_p\,x_k$$

where $m_p$ is a vectorized, form of $M_p$ that as 1 row and $N_xN_y$ columns i.e. $m_p \in \mathbb{R}^{1\times(N_xN_y)}$.

Considering the P distinct measurements in P distinct exposure periods, provides

$$y_k = \phi\ x_k$$

where $\phi \in \mathbb{R}^{P\times(N_xN_y)}$ has P rows and $N_xN_y$ columns and each row p is $m_p$ for p= 1, 2... P and where $y_k \in \mathbb{R}^{P}$ has P rows.

The series of images [x, y] for each spectral channel k can therefore be obtained by solving

$$\widehat{x_k} = argmin_{x_k}\|y - \Phi x\|_2^2 + \tau R(x_k)$$

for k= 1, 2, 3... K.

where $R(X_k)$ denotes the regularizer imposed on the image, and $\tau$ balances the two terms in equations. The regularizer R can, for example, be based upon total variation of the three-dimensional image.

There are K inverse problems to be solved, one for each spectral channel. Estimating $X_k$ for each one of the K spectral channels provides $X_k$ for each spectral channel and these are combined, by stacking, to provide X the three-dimensional data cube [x, y, $\lambda_k$].

Where appropriate, a data cube in three spatial dimensions [x, y, z] is obtained by performing a Fourier transform on the three-dimensional data cube [x, y, $\lambda_k$] with respect to $\lambda_k$.

Any suitable compressive sensing inversion algorithms may be used by processing means 10 to solve the equation (or other loss function) to obtain the desired image. For example, non-linear optimization can be used to produce a three-dimensional image of the object. The image has two spatial dimensions (x,y) and a third dimension in space (z) or wavelength ($\lambda$) forming respectively a real image that has three spatial dimensions (x,y,z) or a hyperspectral (two-dimensional) image (x,y,$\lambda$). Where an optical coherence tomography (OCT) arrangement 17 provides the beam of light 9 from an object, the non-linear optimization can be used to produce a real three-dimensional image of the object.

The sparsity of the transfer function $\Phi$ that represents the spatial modulating means 3 and condensing means 5 over multiple exposure periods causes information compression.

The compression is in the spatial domain. The apparatus 1 can therefore be described as performing spatial compressive sensing.

It is possible to control the number of measurements/exposures P. A smaller P can, for example, produce a result more quickly. A larger P can produce a result with greater resolution/precision and less noise, but it can take a longer time.

Figs. 1 and 2 therefore illustrate examples of a method comprising:

applying a different spatial modulation to received light in dependence upon a current exposure period in a series of a plurality of exposure periods, to produce differently spatially modulated light over the plurality of exposure periods; spatial condensing means for condensing the spatially modulated light for detection by a detector; and detecting, separately during each one of the plurality of exposure periods, condensed differently spatially modulated light.

The 'current' exposure period is the contemporaneous exposure period at the time or performing the method.

Fig. 3 illustrates an example in which the source 17 of the broadband beam of light 9 provided to the apparatus 1 is an optical coherence tomography arrangement 17.

Optical coherence tomography (OCT) is also called low coherence light interferometry. A double path interferometer 17 comprising a sample path for an object 21 and a reference path. In this example, the double path interferometer arrangement 17 is used in a Michelson configuration to create interference between an optical beam reflected from an object 21 in the sample path and a reference optical beam in the reference path. The above described apparatus 1 can be used to detect the interference.

A double path interferometer, for example a Michelson interferometer, uses a beam splitter 33, to split light from a light source 31 into two beams of the same bandwidth that travel at 90 degrees to each other along different paths- a sample (object) path and a reference path . In the Michelson interferometer, each of those light beams is reflected back toward the beam splitter 33 which then combines their amplitudes using the superposition principle. The resulting interference pattern is directed to the detector 7 via spatial modulating means 3 and condensing means 5.

In this example, a light beam is reflected back from the object 21 and the other reference light beam is reflected back from a mirror 35.

The object 21 reflects broadband light (at least $\lambda_1$ to $\lambda_K$) which has been directed onto the object 21. Different wavelengths ($\lambda_1$ to $\lambda_K$) of the incident light are reflected differently depending upon the internal structure of the object 21. This provides a plurality of spatial images that are comprised in the beam of light 9 provided to the apparatus 1. Each of the spatial images corresponds to a different wavelength of light $\lambda_k$ ($\lambda_1$ to $\lambda_K$). The different spatial images therefore comprise information about the internal structure of the object 21. The different spatial images define a three-dimensional signal [x, y, $\lambda_k$].

The arrangement 17 is a temporal-spectral compressive sensing optical coherence tomography (TS-CS-OCT) arrangement that uses a spatial modulating means 3 (e.g. spatial modulating means 3 before condensing means 5) on the interference signal before detection of a spectrogram of overlapping differently masked spectrograms (over a plurality of associated exposure periods).

The detector 7 can detect the different wavelengths simultaneously so that all the information is recorded in single image (one-shot operation) in an exposure period. The apparatus 1 therefore enables $N_\lambda$, channel signals to be recovered from a series of measurements. The detector 7 produces, from multiple single shots, without spatial or spectral scanning, spectral domain information that can be used to produce a three-dimensional image of the object 21.

In this example there is full field illumination of the object 21 by a light beam over an area. A reflected beam of light from the object 21 provides full field illumination of a spatially coded aperture 9 over an area. The spatially coded light provides full-field illumination of a condensing element 5 over an area.

The OCT arrangement 17 comprises a light source 31, a beam splitter 33, a static reference mirror 35, one or more microscope objectives 37, one or more compensators 39, and one or more focusing elements 41. The OCT arrangement 17 is a spectral domain arrangement. It uses a light source 31 of a fixed broad spectrum.

In examples of the disclosure the light source 31 used for measurement is a broadband light source which provides light having a range of wavelengths. The wavelength of the light that is used may depend on the type of object 21 that is to be imaged or any other suitable factor. In some examples the light used may be infrared light. in some examples the wavelength of the light used may have a range of wavelengths between 400nm and 1500nm. The "centre wavelength" can be for example at 830nm with a frequency range of 810nm to 850nm for a 40nm bandwidth or the "centre wavelength" can be 1300nm with a frequency range of 1280nm to 1320nm for a 40nm bandwidth or the "centre wavelength" can be 1500nm with a frequency range of 1480nm to 1520nm for a 40nm bandwidth. Other centre wavelengths and other bandwidths are possible.

The output light beam from the light source 31 is incident on the beam splitter 33. The beam splitter 33 may comprise a prism, a half silvered mirror or any other suitable component.

In the OCT arrangement 17 half of the split beam provides the reference beam and is provided to the static reference mirror 33. A microscope objective 37 and a compensator 39 are provided between the beam splitter 33 and the static reference mirror 35. The microscope objective 37 may comprise any means which may be arranged to focus the beam of light. In some examples the microscope objective 37 may comprise one or more lenses or any other suitable optical elements. The compensator 39 may comprise a compensator plate or any other suitable compensating element. In the example of Fig. 3 the compensator 39 comprises a decoupling compensator polarizer.

The other half of the split beam provides the object beam and is provided to the object 21. The object 21 may be arranged to be moved along the z axis, but not during imaging. This axis may enable the focussing of the three-dimensional images provided by the OCT arrangement 17. In the example of Fig. 3 the object 21 is provided on a motorised arrangement so as to enable movement along the z axis between measurement (series of exposure periods used for a single measurement). In other examples a manual arrangement, or any other suitable type of arrangement, could be used.

A microscope objective 37 and a compensator 39 are provided between the beam splitter 33 and the object 21. The microscope objective 37 may comprise any means which may be arranged to focus the beam of light. In some examples the microscope objective 37 may comprise one or more lenses or any other suitable optical elements. The compensator 39 may comprise a compensator plate or any other suitable compensating element. In the example of Fig. 3 the compensator 39 comprises a decoupling compensator polarizer.

The different wavelengths of the light provide coherence of the object beam and the reference beam at different optical path lengths. Therefore, the different wavelengths of light provide information about different depths within the object 21. Different features within the object 21 reflect the incident light by different amounts. The interference between the reflected object beam and the reflected reference beam therefore provides information about the features within the object 21.

As the different frequencies of light provide information about different depths within the object 21 this enables three-dimensional imaging of the object 21. The three-dimensional imaging 21 may enable different features at different depths within the object to be identified and/or analysed. This ensures that the information obtained in the examples of the disclosure comprises information about the internal structure of an object 21 and not just information about the surface of the object 21.

The OCT arrangement 17 also comprises one or more focusing elements 41. The focussing element 41 may comprise a lens or any other suitable means for focusing a beam of light. The focusing element 41 is arranged to focus the input beam of light 9 into the apparatus 1 for detecting.

In the example of Fig. 3 the apparatus 1 comprises a spatial modulating means 3, a condensing means 5 and a detector 7 as previously described. The input beam of light 9 provided to the apparatus 1 is from the OCT arrangement 17.

Referring back to Fig. 1, the means 102 can be provided by a controller. Implementation of a controller may be as controller circuitry. The controller may be implemented in hardware alone, have certain aspects in software including firmware alone or can be a combination of hardware and software (including firmware).

The controller may be implemented using instructions that enable hardware functionality, for example, by using executable instructions of a computer program 102 in a general-purpose or special-purpose processor that may be stored on a computer readable storage medium (disk, memory, etc.) to be executed by such a processor.

The processor can be configured to read from and write to a memory. The processor may also comprise an output interface via which data and/or commands are output by the processor and an input interface via which data and/or commands are input to the processor.

The memory can store a computer program 103 comprising computer program instructions (computer program code) that controls the operation of the apparatus 1 when loaded into the processor. The computer program instructions, of the computer program 103, provide the logic and routines that enables the apparatus to perform the methods described. The processor by reading the memory is able to load and execute the computer program 103.

The apparatus 1 can therefore comprise:

at least one processor; and
at least one memory including computer program code
the at least one memory and the computer program code configured to, with the at least one processor, cause the apparatus at least to perform:
applying a different spatial modulation to received light in dependence upon a current exposure period in a series of a plurality of exposure periods of a detector, to produce differently spatially modulated light over the plurality of exposure periods.

In at least some examples, the computer program 103, when run by at least one processor, enables the at least one processor to control:
applying a different spatial modulation to received light in dependence upon a current exposure period in a series of a plurality of exposure periods of a detector, to produce differently spatially modulated light over the plurality of exposure periods.

The computer program 103 may arrive at the apparatus 1 via any suitable delivery mechanism. The delivery mechanism may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 103. The delivery mechanism may be a signal configured to reliably transfer the computer program 103. The apparatus 1 may propagate or transmit the computer program 103 as a computer data signal.

The computer program instructions may be comprised in a computer program, a non-transitory computer readable medium, a computer program product, a machine readable medium. In some but not necessarily all examples, the computer program instructions may be distributed over more than one computer program.

A memory can be implemented as one or more separate components/circuitry some or all of which may be integrated/removable and/or may provide permanent/semi-permanent/ dynamic/cached storage.

A processor can be implemented as one or more separate components/circuitry some or all of which may be integrated/removable. The processor can be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions and

(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

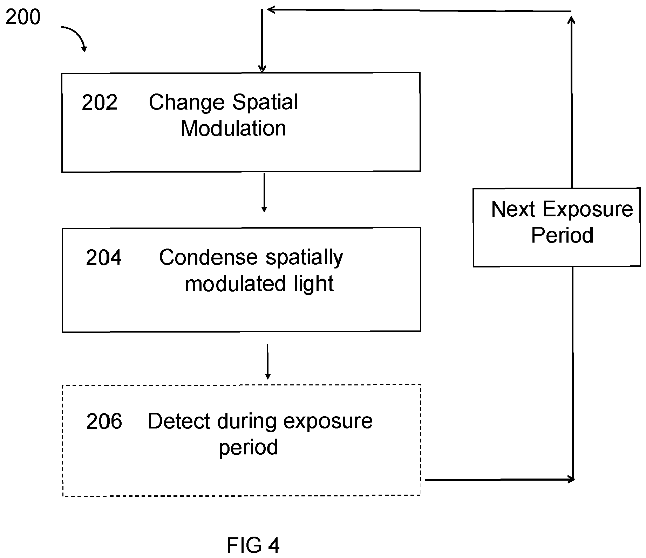

Fig. 4 illustrates an example of a method 200. The method comprises at block 202 applying a different spatial modulation to received light in dependence upon a current exposure period in a series of a plurality of exposure periods, to produce differently spatially modulated light over a plurality of exposure periods; at block 204 condensing the spatially modulated light for detection by a detector; and, optionally, at block 206, detecting, separately during each one of multiple exposure periods, spatially modulated light.

The 'current' exposure period is the contemporaneous exposure period at the time or performing blocks 202, 204 of the method 200. Each exposure period has an associated different spatial modulation for application to received light. The method is performed over a series of a plurality of exposure periods. There is therefore a series of associated different spatial modulations, one for each exposure period. The 'current' position in the series determines the currently applied spatial modulation.

At block 202, a spatial modulation that is for application to received light is changed in dependence upon the start of a new exposure period of the detector. The changed effective spatial modulation is applied to received light to produce spatially modulated light for detection by the detector.

At block 204, the spatially modulated light is condensed for subsequent detection, at block 206, by a detector.

The method then returns, at the end of the current exposure period, to block 202 to change the spatial modulation in dependence upon the start of a new exposure period of the detector.

In some but not necessarily all examples, the condensed image can be considered to be a point source of light, for example, effectively having zero spatial dimension on the scale of the detector 7. For example, it can have a maximal extent of 1 $\mu$m. That is the condensed image is sized to be captured by a single pixel at the detector 7.

However, in other examples, the condensed image can be larger than a point source of light, for example, effectively having spatial dimension on the scale of the detector 7. For example, it can have a maximal extent of more than a single pixel at the detector 7 but less than 4 pixels or less than 9 pixels. The detector 7 still separately detects each wavelength/spectral channel $\lambda_k$ over each different exposure period p but the detection is not at different single pixels but at different groups of pixels. The different groups of pixels can be non-overlapping. The different groups of pixels can be overlapping. In the latter example, it may be desirable to use masks pattern $M_{p,k}$ that are different (incoherent) between exposures and are spectrally different (incoherent) within a single exposure.

More generally, mask patterns $M_{p,k}$ that are different (incoherent) between exposures and are spectrally different (incoherent) within a single exposure (masks with intra-exposure spectral variation) can be used instead of the above mention mask patterns $M_p$ that are different (incoherent) between exposures (inter-exposure variation).

Where a structural feature has been described, it may be replaced by means for performing one or more of the functions of the structural feature whether that function or those functions are explicitly or implicitly described.

The above described examples find application in non-destructive investigations including non-destructive testing, non-destructive imaging etc.

The above described examples find application in healthcare such as Ophthalmology, Oncology, Cardiology, dermatology etc.

The above described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

In this brief description, reference has been made to various examples. The description of features or functions in relation to an example indicates that those features or functions are present in that example. The use of the term 'example' or "for example" or "may" in the text denotes, whether explicitly stated or not, that such features or functions are present in at least the described example, whether described as an example or not, and that they can be, but are not necessarily, present in some of or all other examples. Thus "example", "for example" or "may" refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. An apparatus comprising:

   a detector configured to detect, separately during separate exposure periods of multiple exposure periods, spatially modulated light;
   spatial modulation means for applying a different spatial modulation to received light separately during separate exposure periods of the multiple exposure periods, to produce spatially modulated light; and
   spatial condensing means for condensing the spatially modulated light for detection by the detector.

2. An apparatus as claimed in claim 1, wherein the spatial condensing means comprises one or more optical elements.

3. An apparatus as claimed in claim 1 or 2, wherein the spatial condensing means comprises a light guide of narrowing aperture to condense the light, via total internal reflection, in transverse directions.

4. An apparatus as claimed in claim 1, 2 or 3, wherein the spatial condensing means comprises a tapering optical fibre that has a reducing cross-sectional area.

5. An apparatus as claimed in any preceding claim, wherein the detector comprises a different detector for each one of multiple spectral channels.

6.  An apparatus as claimed in any preceding claim, wherein the detector comprises a different single pixel detector for each one of multiple spectral channels.

7.  An apparatus as claimed in any preceding claim, wherein the different effective spatial modulation is configured to cause modulation by different spatial modulation patterns of the received light, wherein different spatial patterns are used for different exposure periods.

8.  An apparatus as claimed in any preceding claim, wherein the spatial modulation, for an exposure period, is randomized, pixelated modulation over a two-dimensional area.

9.  An apparatus as claimed in any of any preceding claim, wherein the spatial modulation is pixelated modulation over a two-dimensional area, and the pixelated modulation comprises pixels arranged in rows and columns that are parallel to rows and columns of pixels of the detector when projected onto the detector.

10. An apparatus as claimed in any preceding claim, wherein the spatial modulating means comprises a two-dimensional spatially coded aperture comprising at least a first plurality of portions, having a first transparency, and at least a second plurality of portions, having a second different transparency, wherein the first plurality of portions and the second plurality of portions are spatially distributed in two dimensions.

11. An apparatus as claimed in any preceding claim, wherein the spatial modulating means comprises a spatially coded aperture that has a time variable pattern or has a fixed pattern and is movable.

12. A system comprising the apparatus as claimed in any preceding claim, wherein the system or apparatus further comprises processing means for processing output of the detector to obtain an image of at least part of an object wherein an input beam of light for spatial modulation and detection by the apparatus comprises light reflected from the object; and
    means for providing an image of at least part of the object from an electrical output signal of the detector.

13. A system as claimed in claim 12, wherein the object has three spatial dimensions and wherein the input beam of light for spatial modulation and detection by the apparatus is obtained from an optical coherence tomography arrangement and the provided image is a real three-dimensional image of the object.

14. A method comprising:

    applying a different spatial modulation to received light in dependence upon a current exposure period in a series of a plurality of exposure periods, to produce differently spatially modulated light over the plurality of exposure periods;
    condensing the spatially modulated light for detection by a detector.

15. A computer program that when run by at least one processor enables the at least one processor to control:
    applying a different spatial modulation to received light in dependence upon a current exposure period in a series of a plurality of exposure periods of a detector, to produce differently spatially modulated light over the plurality of exposure periods.

FIG. 1

FIG 2

Fig. 3

200

202 Change Spatial
Modulation

204 Condense spatially
modulated light

206 Detect during exposure
period

Next Exposure
Period

FIG 4

Europäisches Patentamt

European Patent Office

Office européen des brevets

# EUROPEAN SEARCH REPORT

Application Number

EP 20 18 2724

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/083312 A1 (BARANIUK RICHARD G [US] ET AL) 4 April 2013 (2013-04-04) <br> * figures 1-22 * <br> * paragraphs [0002], [0019], [0073], [0074] - [0079], [0097] - [0099], [0108], [0112], [0113], [0138], [0147], [0148] * | 1-15 | INV. <br> G01J3/02 |
| X <br><br> A | EP 2 631 619 A1 (TNO [NL]) 28 August 2013 (2013-08-28) <br> * figures 1-4 * <br> * paragraphs [0005], [0014] - [0018], [0024], [0026], [0029], [0034], [0035], [0048] - [0050], [0058] * | 1,2,5-14 <br><br> 3,4,15 | |
| X <br><br> A | EP 3 477 246 A1 (NOKIA TECHNOLOGIES OY [FI]) 1 May 2019 (2019-05-01) <br> * figures 1-7 * <br> * paragraphs [0001], [0021] - [0024], [0028], [0041], [0072], [0080] - [0084] * | 1,2,5-14 <br><br> 3,4,15 | |
| A | WO 2007/087372 A2 (CALIFORNIA INST OF TECHN [US]; BEARMAN GREGORY H [US] ET AL.) 2 August 2007 (2007-08-02) <br> * figures 1-13 * <br> * paragraphs [0008], [0009], [0033] - [0039] * | 1-15 | TECHNICAL FIELDS SEARCHED (IPC) <br><br> G01J <br> G02B <br> G02F |

The present search report has been drawn up for all claims

| Place of search | Date of completion of the search | Examiner |
|---|---|---|
| Munich | 18 November 2020 | Gangl, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 18 2724

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2020

| Patent document cited in search report | | | Publication date | Patent family member(s) | | | Publication date |
|---|---|---|---|---|---|---|---|
| US 2013083312 | A1 | | 04-04-2013 | NONE | | | |
| EP 2631619 | A1 | | 28-08-2013 | EP | 2631619 | A1 | 28-08-2013 |
| | | | | EP | 2820387 | A1 | 07-01-2015 |
| | | | | US | 2015116705 | A1 | 30-04-2015 |
| | | | | WO | 2013129921 | A1 | 06-09-2013 |
| EP 3477246 | A1 | | 01-05-2019 | CN | 111344533 | A | 26-06-2020 |
| | | | | EP | 3477246 | A1 | 01-05-2019 |
| | | | | KR | 20200079279 | A | 02-07-2020 |
| | | | | WO | 2019081807 | A1 | 02-05-2019 |
| WO 2007087372 | A2 | | 02-08-2007 | US | 2007182962 | A1 | 09-08-2007 |
| | | | | WO | 2007087372 | A2 | 02-08-2007 |

EPO FORM P0459

For more details about this annex : see Official Journal of the European Patent Office, No. 12/82